Europäisches Patentamt

European Patent Office

Office européen des brevets

(19)

(11) **EP 0 944 768 B1**

(12) **EUROPEAN PATENT SPECIFICATION**

(45) Date of publication and mention
of the grant of the patent:
**20.11.2002 Bulletin 2002/47**

(21) Application number: **97949739.3**

(22) Date of filing: **05.12.1997**

(51) Int Cl.⁷: **F01K 13/02**

(86) International application number:
**PCT/US97/22160**

(87) International publication number:
**WO 98/026160 (18.06.1998 Gazette 1998/24)**

(54) **A GRAPHICAL USER INTERFACE SYSTEM FOR STEAM TURBINE OPERATING CONDITIONS**

GRAPHISCHE BENUTZERSCHNITTSTELLE FÜR DAMPFTURBINENBETRIEBSBEDINGUNGEN

SYSTEME D'INTERFACE GRAPHIQUE HOMME-MACHINE POUR LA SURVEILLANCE DES CONDITIONS DE FONCTIONNEMENT D'UNE TURBINE A VAPEUR

(84) Designated Contracting States:
**BE CH DE DK ES FI FR GB GR IE IT LI LU MC NL PT SE**

(30) Priority: **13.12.1996 US 768047**

(43) Date of publication of application:
**29.09.1999 Bulletin 1999/39**

(73) Proprietor: **SIEMENS CORPORATE RESEARCH, INC.**
**Princeton, New Jersey 08540 (US)**

(72) Inventors:
• **SANTOSO, Nugroho, Iwan**
**Cranbury, NJ 08512 (US)**
• **ZORNER, Walter**
**D-91083 Baiersdorf (DE)**

(74) Representative: **Litchfield, Laura Marie et al**
**Haseltine Lake & Co.**
**Imperial House**
**15-19 Kingsway**
**London WC2B 6UD (GB)**

(56) References cited:
**EP-A- 0 389 132          US-A- 4 025 765**
**US-A- 4 827 429          US-A- 4 970 670**

• **PATENT ABSTRACTS OF JAPAN vol. 004, no. 072 (M-013), 27 May 1980 & JP 55 035112 A (TOSHIBA CORP), 12 March 1980,**
• **EDLUND C ET AL: "COMPARING DISPLAY INTEGRATION STRATEGIES FOR CONTROL OF A SIMPLE STEAM PLANT" 2 October 1994 , PROCEEDINGS OF THE INTERNATIONAL CONFERENCE ON SYSTEMS, MAN, AND CYBERNETICS, SAN ANTONIO, OCT. 2 - 5, 1994, VOL. 3 OF 3, PAGE(S) 2686 - 2691 , INSTITUTE OF ELECTRICAL AND ELECTRONICS ENGINEERS XP000530648**

## Description

In the operation of steam turbines, as for turbo-generators, it is important that operating parameters be kept within defined limits for proper and safe operation, including start-up and shut-down phases. Unsafe operation can have grave consequences for personal injury and material damage.

Reference is hereby made to an application by the present inventors being filed concurrently herewith and entitled A METHOD FOR BLADE TEMPERATURE ESTIMATION IN A STEAM TURBINE whereof the disclosure is incorporated herein to the extent it does not conflict with the present application.

Typically, in steam turbo-generator operations, the turbine was operated around full power or, when the demand for power was insufficient, it was shut down. Particularly in operation as part of a large power grid, operation at less than full load may be required. Under such conditions, complex patterns of temperature, pressure, steam wetness, reheating, expansion and compression, may occur, possibly resulting in excessive turbine blade temperature. Such conditions may spell blade failure with possibly disastrous consequences. Thus, monitoring operation under conditions where the intake steam pressure is at or lower than the output pressure are of practical importance. Background material is available in books such as W. W. Bathie, "Fundamentals of gas turbines", John Wiley and Sons, 1996; and H. Herlock, "Axial flow turbines: Fluid mechanics and thermodynamics", Butterworth, London, 1960.

Good mathematical models for simulating the steam behavior in a turbine in its entire operating domain are not readily available, especially concerning periods in which the main-steam pressure is near or lower than the exhaust pressure. During such periods, the fluid flow behavior is very complex because the radial component of velocity become significant as compared with the axial velocity component. The available simplified mathematical models for simulating the steam behavior during normal loading typically do not perform properly when the intake pressure is near or lower than the output pressure.

In new large steam turbines, temperature measuring devices are installed at the respective stages of the HP and LP casings. These measurements provides an indication to the operator or supervising engineer in charge whenever the blade temperature exceeds its limit.

EP 0389132 discloses a control system for an industrial plant, a display device for such a control system and a method of controlling an industrial plant.

The control system receives plant data and combines this with a number of graphical representations for display. If a user of the system wants to simplify the displayed information, then the control system has means for modifying the displays, and displaying that modified display. This means that various levels of plant information may be presented, depending upon the preferences of the user.

The need for blade temperature monitoring for smaller and older turbine, as well as a more practical and cost effective ways than installing temperature probes, has led to a need, herein recognized, for a practical system for estimating in real time and monitoring turbine blade temperature during operation.

The present invention is intended to be practiced preferrably with the application of a programmable computer.

In accordance with an aspect of the invention, a method for blade temperature estimation in a steam turbine utilizes measurement values including pressure and temperature at locations other than directly at the blades, principally at the input and output stages. Initially, blade temperature is simulated by using a water/steam cycle analysis program as well as by directed experiments. An artificial neural network (ANN) is trained by presenting the measurement values and the blade temp values. In a present exemplary embodiment, it is found that 4 values provide a satisfactory result. In one method the ANN is used directly to derive operating blade temp values.

In a accordance with another aspect of the invention, a hybrid approach, 5 measured values are utilized. A subset of, for example, 4 parameter values is used for training the ANN and another subset of, for example, 3 values is used for performing a calculation for another intermediate parameter. Using the intermediate parameter and one of the 5 measured values, a blade temperature is calculated.

In accordance with still another aspect of the invention, the user interface provides a real-time information display for a supervising engineer in charge of turbine operation so that critical parameter values and undesirable combinations of operating conditions are readily observed and deviations are made apparent so that corrective action can be initiated rapidly. While graph plots of parameters can be readily presented, such a format generally does not readily provide an overall picture of the state of the turbine with regard to the distribution and combination of temperature, pressure, steam wetness or superheat, and turbulence effects.

In accordance with the present invention, an overview of the operating situation is made more readily apparent by representing the operating expansion and compression processes by lines on a Mollier enthalpy/entropy chart. In combination, real-time parameter values and parameter trends are also presented. Using the Mollier chart information in conjunction with trend and real-time information, the supervising engineer can more quickly identify and correct undesirable and potentially troublesome operation conditions.

In accordance with an aspect of the present invention, a system utilizes a hybrid ANN (artificial neural network)-algorithmic based scheme for estimating the blade temperature from other measurements which are commonly available. The commonly available measurement values are herein utilized. The training data for the ANN includes both data generated by mathematical model and by experiment.

The invention will be better understood from the following detailed description in conjunction with the drawing, in which

Figure 1 shows a windage module architecture in accordance with the invention;
Figure 2 shows an artificial neural network based scheme for blade temperature estimation in accordance with the invention;
Figure 3 shows a training procedure for an artificial neural network in accordance with the invention;
Figure 4 shows graphical user interface structures applicable in conjunction with the invention; and
Figure 5 shows graphical interface views applicable in conjunction with the invention.

During the operation of the steam turbine, heating due to windage must be maintained within allowable limits by the operating mode. The windage modules for HP and LP turbines in accordance with the present invention will provide the operator with an estimation of the blade temperature at the respective turbine stages. The interactive user interface herein disclosed displays the real-time value, a trend graph of these values, and the respective states within the Mollier diagram. Supervisory recommendation may be deduced from the estimation and other available measurement values.

In the following, examples of the windage phenomenon are given. In the HP turbine, as there is no steam flow through the turbine following a trip, the extent of energy transfer depends on the pressure and the steam density in the turbine. At a full load trip, the corresponding high cold reheater pressure will initially be present. In order to avoid impermissible heating by windage losses, an adequate pressure decay or a certain cooling steam flow is required. The expansion lines in the Mollier diagram indicate the advantage of a sufficient HP turbine flow after full load rejection to zero load. The operator is much better informed by such a figure.

On-line visualization of the expansion/compression lines is especially beneficial for other parts of the turbine which are subject to overheating, due, in the present particular case, to the windage phenomenon. For heating steam turbines when the control valves, for example, in the cross over line for the two lower heaters are closed, the LP turbine requires cooling steam to hold within permissible limits the temperature rise caused by windage in the last stage. In this operating mode, the steam in the LP turbine absorbs energy resulting from the windage losses which predominate significantly within the last stages.

In general the windage module will follow the system architecture used in a system known as the DIGEST system. DIGEST is a modular monitoring system for power system plant developed by the KWU-FTP activity of Siemens Aktiengesellschaft, (Simens AG), a corporation of Germany. DIGEST features a modular system architecture which can be divided into six different levels which will be explain briefly below. The module components are written in C, with much flexibility in building any structure of choice.

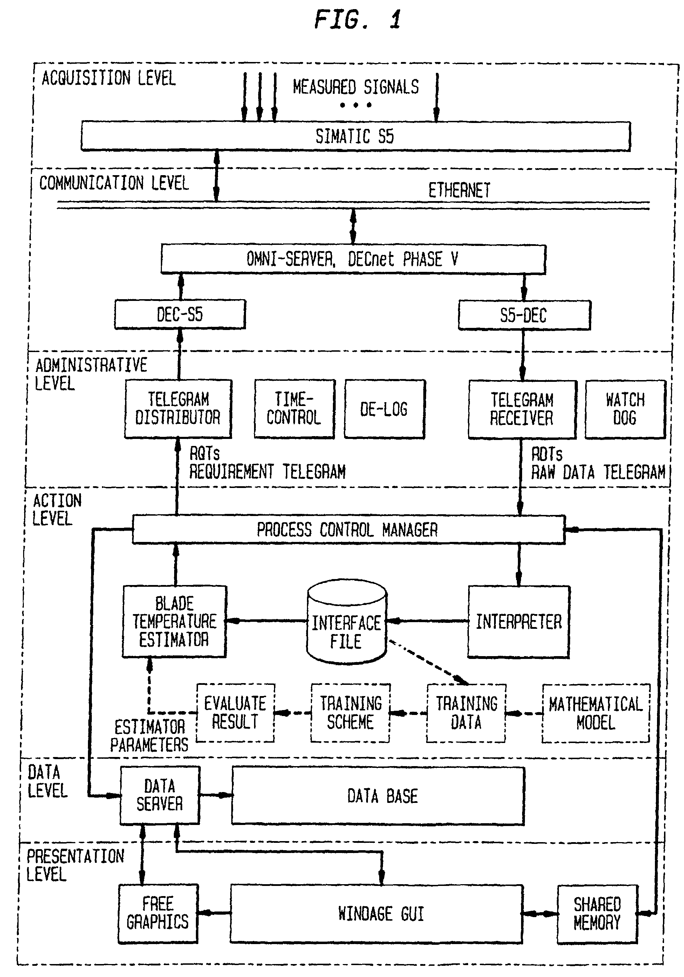

The proposed windage module system architecture is shown in Figure 1. The first two levels are already available as part of DIGEST. Modifications were done to the administrative and data levels. Modifications in both the communication and data levels include parameter specification which is needed for requesting the module-specific data through the data bus,and for creating the data server and data base. The main windage module development is done mainly at the action and presentation levels.

As indicated in Figure 1, the six levels in the windage module are:

1. Acquisition level. This level manages the data acquisition process, which comoprises several programmable logic controllers (PLC) 2 of the type Siemens Simatic 5. Documentation on Simatic 5 is available from Siemens Industrial Automation. Its capabilities include signal sampling, A/D conversion, limited computation, executing sequence process action, cycle timing, and open communication functions. It is used in this context as a data acquisition device where it samples the measurement data at a predetermined rate, digitizes it and transfers the data through the ethernet network asynchronously.

2. Communication level. This level basically is the communication server 6 which manages the transfer of information between the network and the DEC (Digital Equipment Corporation) digital workstation machine(s). The standard DEC module that handles the communication issue is called Omni-Server/DECnet PhaseV. The processes within the DEC which manage the the data transfer are indicated by DEC-55, 8, and S5-DEC, 10. DEC-S5 manages the data transfer from the adminstrative level to the S5, and S5-DEC manages data transfer from the S5 to the adminstrative level.

3. Adimistration level. An administration level of control handles the data request from the windage process control by propagating the request in the right format to a communication level, which is done by a telegram distributor module 12. It also manages the incoming data in a certain format and forwards the data back to the process control for storage. This is done by a telegram receiver module 14. Other functions include managing the buffer capacity (de-log), 16, self checking process (watchdog), 18, and several timers/clocks for interrupt purposes (time-control), 20. Self checking process is mainly to check the status of all processes within the system, and re-boot the system if necessary.

4. Action level. The action level controls the continuous background process and computation. These include the initiation of data request (sending RQTs), management of incoming data (RDTs), data storage, all computation processes, and storage of results. A more detail description of this level can be found in the next section. This level may also include the output management which test the validity of the computation result. In this scheme the results of the hybrid artificial neural network (ANN) estimator are always compared to the result of the analytical module. This verification is required to detect possible bad results which are usually caused by input values which are far away from all samples that had been presented during the ANN training period. Large discrepancies may indicate that further re-training is in order.

5. Data level. The data level handles all processes concerning data storage and access. It includes the data server 22 and data base 24. All access to the data base must be done through the data server 22. Once the data is stored in the right format into the database 24, it can be accessed easily by all levels.

6. Presentation level. The presentation level provides a graphical user interface which allow the users to view all the necessary information in several different fashions, that is, current values, trend diagram and Mollier diagram. It consist of the Windage Graphical User Inteface 26, Free Graphics 28, and shared memory 30 for storing the intermediate parameter values needed for the user interface. The free graphics is an independent graphical tool for plotting any parameter values stored in the data base. This tool is developed as a part of the original DIGEST system.

The information is presented in several layers starting with the main windage screen which will mainly show the blade temperatures. The subsequent layers will show the detail conditions for each turbine section. These layers will provide information on all parameter values which are relevant to the operator for making appropriate decisions concerning the turbine operation. Further detail on the process within this level is provided in the following sections. detail in the next section. A development screen is optionally provided for accessing some internal module and system parameters or processes; however, principally because of security reasons, this feature may preferrably be omitted in an actual working version.

The monitoring process may not always be necessary to cycle at the same rate at all times; it should depend on the turbine operating conditions. Several scenarios can be pre-determined for each specific turbine. For example, no load, full load, and low load during slow shutdown, start-up, and load rejection. The monitoring cycle should be adjusted automatically for different conditions, depending on their criticalities, and the respective display may be arranged to pop-up to assist the operator.

The windage module basically has two main processes, the background process and the interactive display process. The background process is responsible for obtaining the necessary parameter values, calculating the blade temperature at a predefine rate, and recording the relevant information into the appropriate shared memory and data base. The interactive display process will show the necessary or requested information graphically at any point of time. The process rate is limited by the minimum amount of time required before all measurements stabilize, and will vary based on the severity of the turbine condition. Operation near the critical blade temperature may require faster process rate.

Before the monitoring process, the ANN must be trained. The training sub-structure is responsible for producing the appropriate weights and parameters that will be used in the monitoring module. This process is done off-line and is not controllable through the GUI interface. The network is trained using the simulated data obtained by computing the estimated temperature using the analytical means for the expected normal operating domain, and actual data obtain from field experiments. The experiments concentrate on generating data in specific low steam flow conditions, such as shutdowns, loss of loads, and start-ups. This arrangement is expected to be able to estimate the blade temperature for the entire turbine operating ranges. Minimal inputs to the estimator are the real-time measurement values of the pressure of the main steam, temperature of the main steam, pressure of the third stage and exhaust pressure. Additional inputs can be optionally provided and evaluated.

The background process will obtain measurement data, calculate the blade temperature and other necessary values, and store those values in appropriate locations. The process sequences are as follows:

Request the necessary measurement data to Acquisition Level through the Communication (using DEC-S5 protocol) and Administrative Levels (telegram distributor).

Receive measurement data from data acquisition system Simatic 5 (Siemens PLC). The request is propagated through the ethernet network, communicated using the S5-DEC protocol, and managed by the tele-capture within the admistrative level. The list of the measurement parameters include:

Pms = Pressure of main steam (bar),
Tms = Temperature of main steam (°C),
P1 = Steam pressure before blading (bar),
T1 = Steam temperature before blading (°C),
P3 = Pressure at the third stage
Pex = Exhaust pressure after reheater (bar)
Peh = Exhaust pressure before reheater (bar),
Teh = Exhaust temperature before reheater (°C),
Tcb = Bottom casing temperature (°C),
Tcu = Upper casing temperature (°C),
Tci = Inside casing temperature (°C),
Tco = Outside casing temperature (°C),
N = Rotational speed (RPM)
Pout = Output power (MW).

Preprocess incoming data into the desired format (interpreter). This process basically reads the incoming data string and reformat it to a standard ASCII format.

Store data in the intermediate files for futher processing.

The estimator will calculate the blade temperature value using the measurement values. The input measurment values used for estimating the blade temperature, at least for the HP turbine, are:

1. Pressure of the main steam (Pms),
2. Temperture of the main steam (Tms),
3. Pressure at the third stage (P3rd), and
4. Exhaust pressure (Pex).
5. Rotational speed.

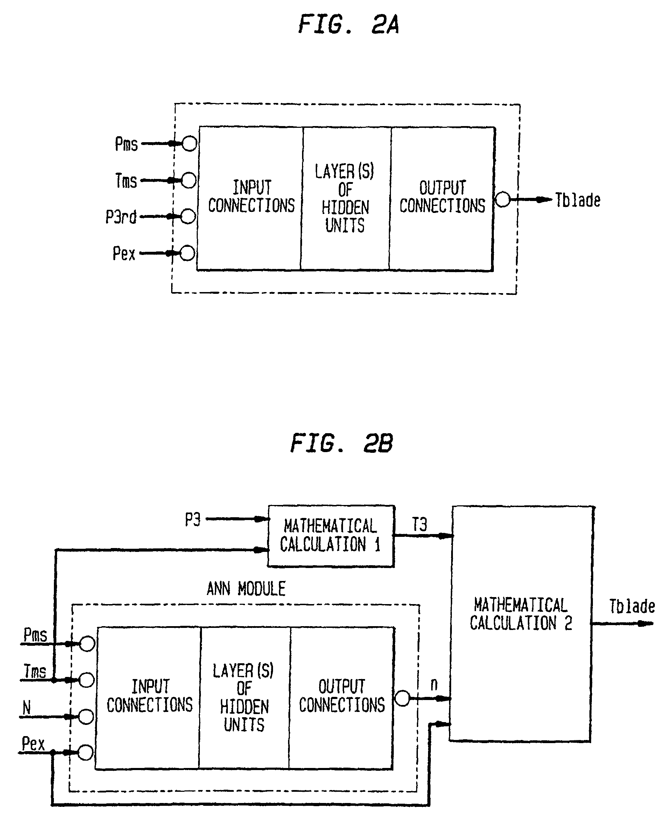

One approach directly estimates the blade temperature using a straightforward 3 layer ANN, Figure 2 (a). The second approach uses a hybrid technique, Figure 2(b) by decomposition of the intermediate parameters, where:

a. One intermediate parameter (T3) is calculated analytically using

$$T_3 = \frac{T_{ms}}{(\frac{P_{ms}}{P_3})^{\frac{n_0-1}{n_0}}} \qquad Eqn. \ 1$$

where $n_0$ is a given constant related to a specific turbine size.

b. Another intermediate constant (n) will be calculated by the trained ANN based on the current input values.

c. Using the two intermediate values, the current blade temperature is then calculated using the equation Equation 2 below.

$$T_{blade} = \frac{T_3}{\ln(\frac{P_3}{P_{ex}})^{\frac{n-1}{n}}} \qquad Eqn. \ 2$$

In this manner, a separation is maintained between the (mathematically) unknown model from the known model. In this manner, the complexity and nonlinearity within the "black box" ANN model is reduced. Moveover, this also helps in reducing the ANN model dependence on specific turbine parameters. This improves the accuracy and robustness of the overall estimation scheme, including generalization between different turbines. This allows the method to retain flexibility such as in the alteration of intermediate parameters in the light of new knowledge, which also applies to input parameters. Such adaptability is herein contemplated.

The blade temperature estimation and other measurement parameters are then stored in two different places: the Data Base and intermediate Shared Memory.

a. All values are stored in the Data Base through the Data Server
b. Values needed for display within the GUI are also stored in a temporary Shared Memory.

These values are then available for reading by the GUI process.

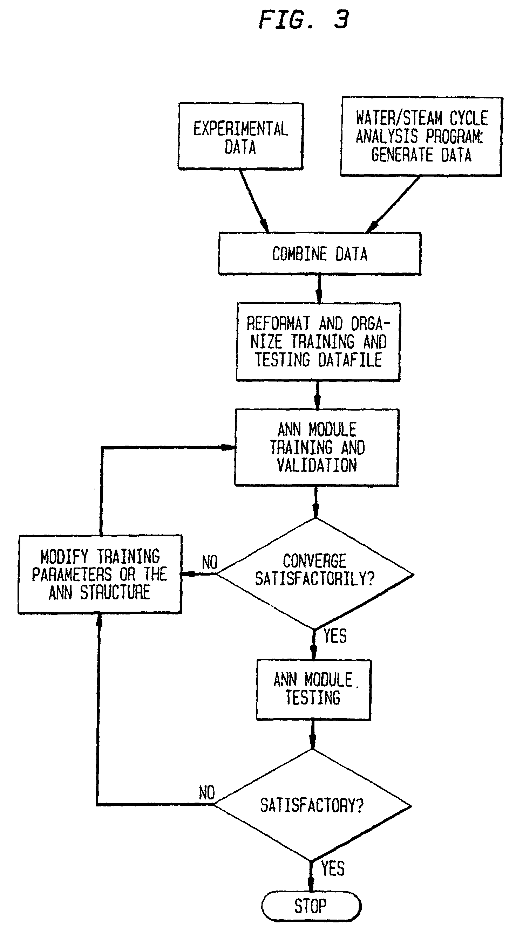

Figure 3 shows the general traning process which applicable to the ANN-module either in the direct approach or the hybrid approach. The only difference is in the input-parameters as indicated in the background process. The process can be described as follows:

The first step is data construction which basically combines the data obtained from simulation using water/steam cycle analysis and data obtained from the experiments. Such analysis is for example included in thermodynamics modules within the DIGEST system. The water/steam cycle analysis is used inside the thermodynamic module in the DIGEST system. As has been explained, the DIGEST monitoring system is currently available in the market through SIEMENS AG.

Next, the data is re- formatted such it matches the input format of the ANN. The data is then reorganized by separating the data into two separate data files where one is used for training and validation purposes, and one for testing purposes. Although there is no certain rule for regrouping the available data, data should be reorganized such that all operating regions should be well represented. In accordance with the present exemplary embodiment, 80% of the available data is utilized for training and validation and the rest for testing.

The ANN structure is a standard multilayer, with 1 hidden layer. The number of hidden units may vary from 4 to 10 without significant improvement in performance: a longer traning period is needed for larger number of hidden units, and it may run the risk of overfitting.

In reference to Figure 3, starting with an initial set of traning parameters, including type of optimization algorithm, type of activation function, number of hidden units, error thresholds, the training process is started. The optimization algorithm used is a standard technique available in various optimization or Neural Network textbooks. See, for example, Hertz, A. Krogh, and R. G. Palmer, "Introduction to the theory of neural computation", A lecture notes volume in the Santa Fe Institute Studies in The Sciences of Complexity, Addison-Wesley Publishing Company, July 1991; and D. Rumelhart, J. L. McClelland, and the PDP Reseach Group, "Parallel distributed processing: Exploration in the mocrostructure of cognition, Volume 1: Foundations", MIT Press, Cambridge 1987.

Several techniques were investigated in conjunction with the present exemplary embodiment, including gradient descent, and few conjugate gradient techniques. Faster convergence is obtained by applying the one variation of conjugate gradient techniques.

If the system satisfactorily converges such that the validation error thresholds are satisfied then the ANN parameters (connection weights and unit's threshold values) are stored for testing. If the system does not converge, then the training parameters must be modified until a solution is obtained.

The processes above may be done repeatedly since it is generally known that the system may converge to different solutions with different initial condition and training parameters. Obtaining significant number of solutions may increase the possibility of finding the global optimal solution,

The solutions are then tested using the data test file. The solution with the smallest error will be used in the estimation process during the background process.

In addition to the current values and trend diagrams, the graphical user interface will also able to show the turbine conditions within the steam behavior Mollier diagram. This diagram, also called a Mollier chart, enthalpy/entropy diagram, or a total heat/entropy diagram, serves as a familiar environment for any thermodynamics engineer and a better representation of the turbine condition with respect to all known critical operating boundaries. Therefore, this on-line turbine condition visualization will better help a user in taking appropriate control actions.

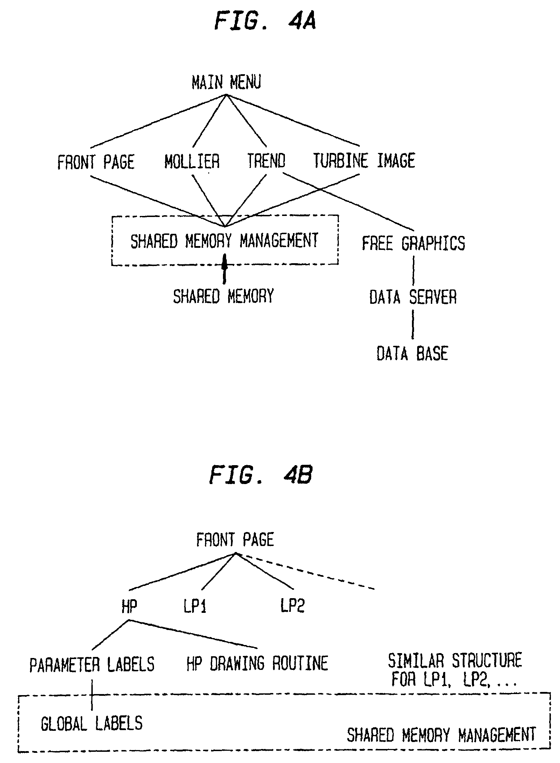

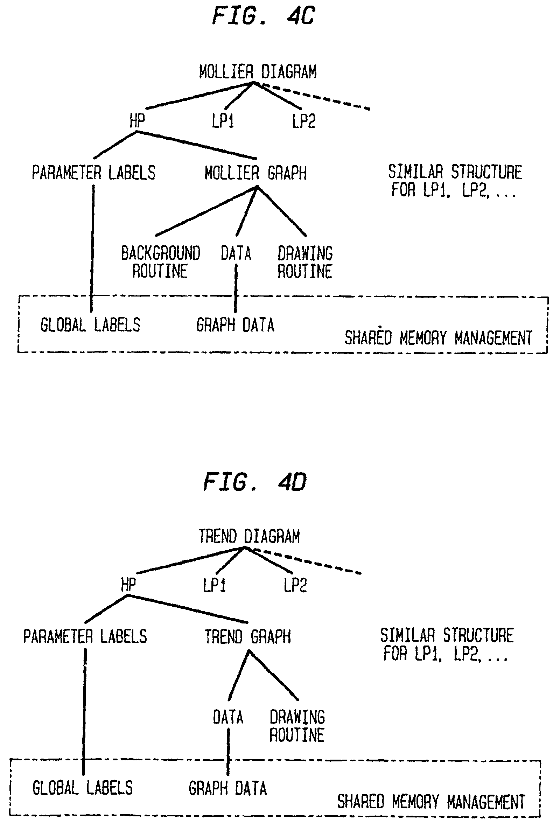

Generally the GUI process must be initiated by the user. It will access values stored by the background process as required. The GUI process follows the following steps (see the correponding illustration in Figure 4).

The Windage Graphical User Interface Module can be initiated independently or from within DIGEST. This will automatically initiate the connection to the Shared Memory unit. The shared memory unit is basically a routine which manages the access and transfer of data between the GUI and any process outside it, which mainly includes a buffer.

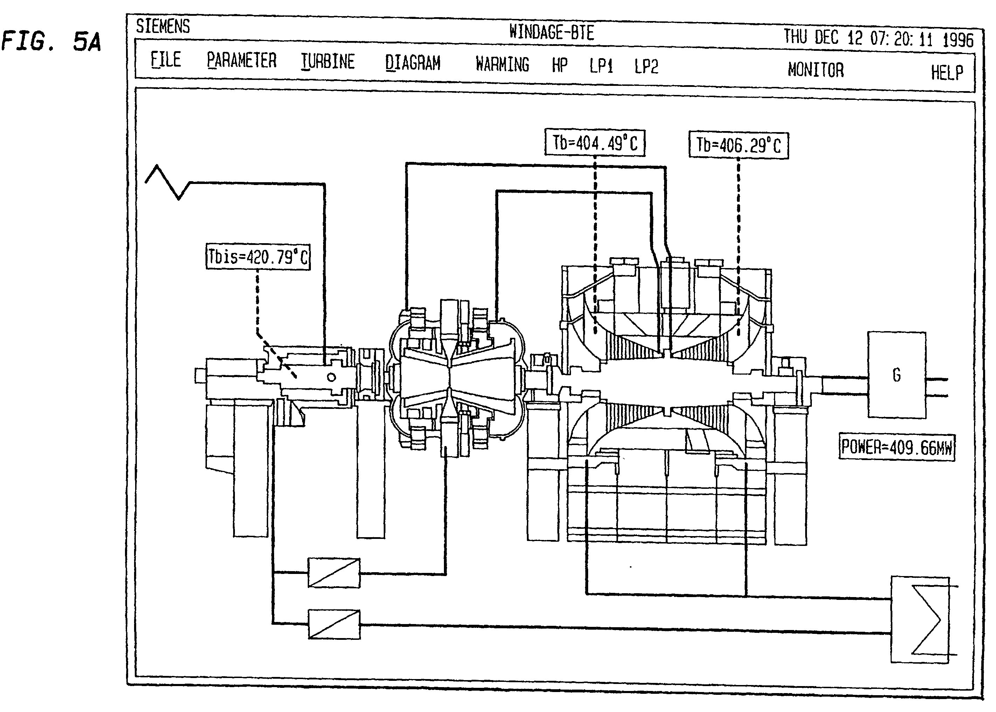

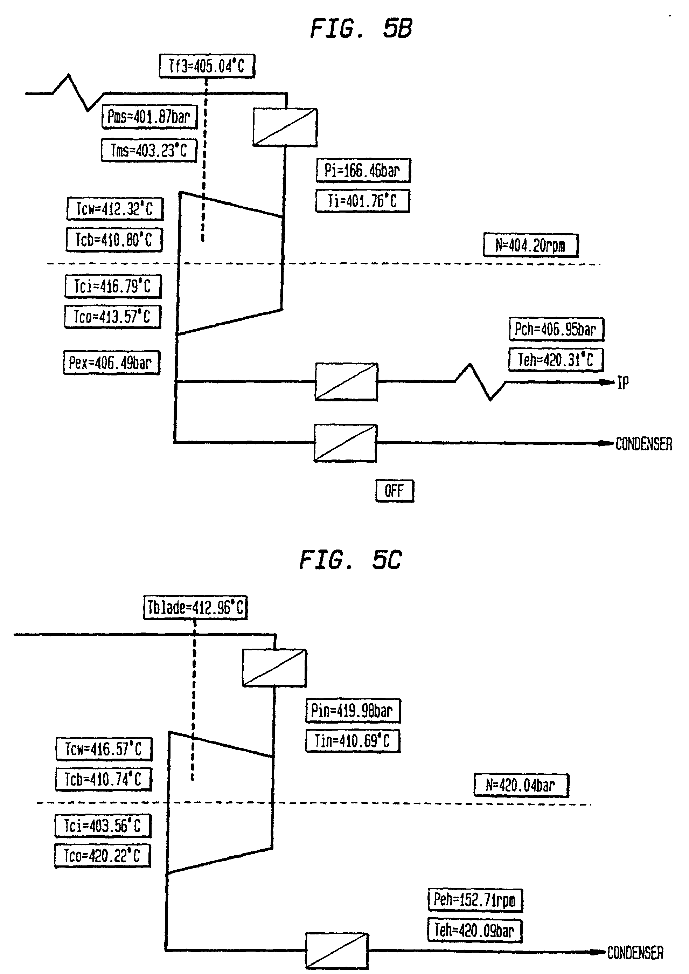

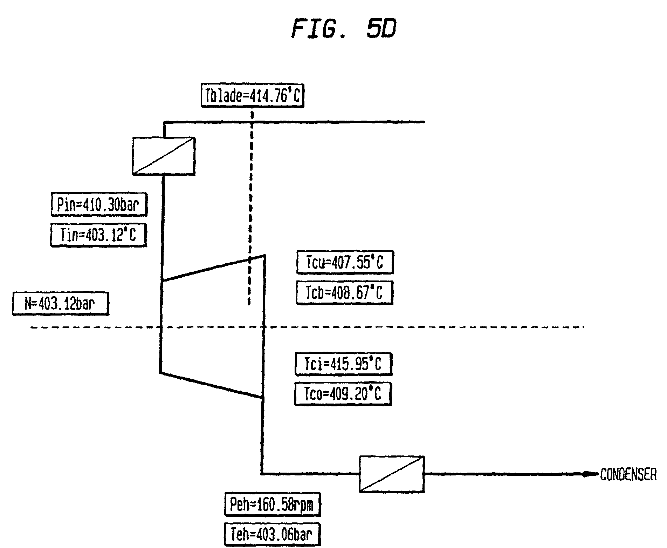

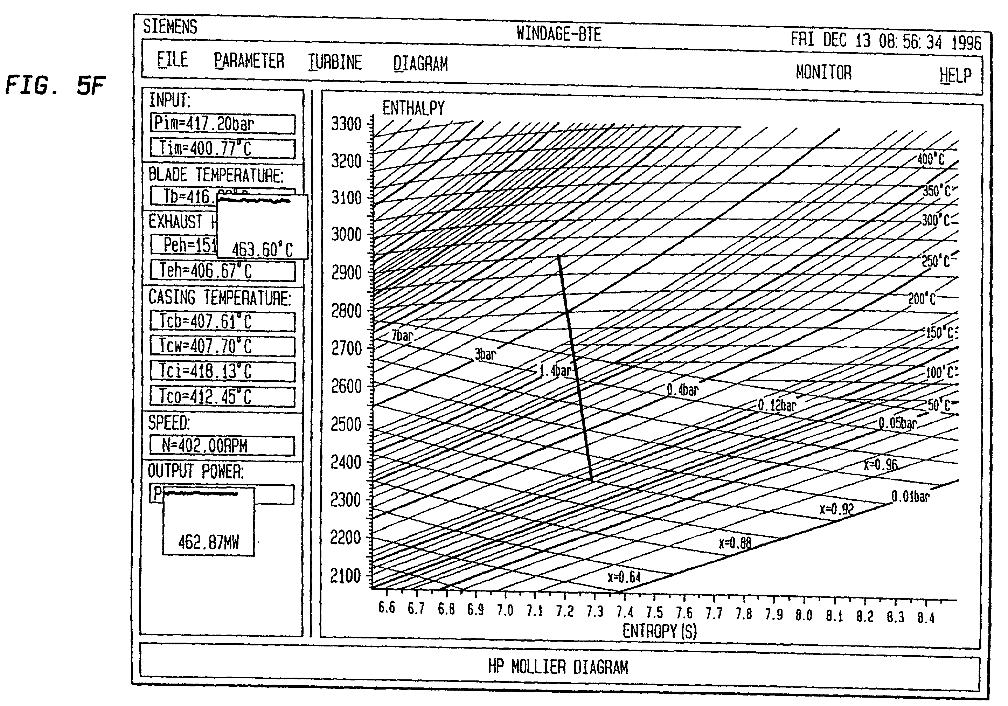

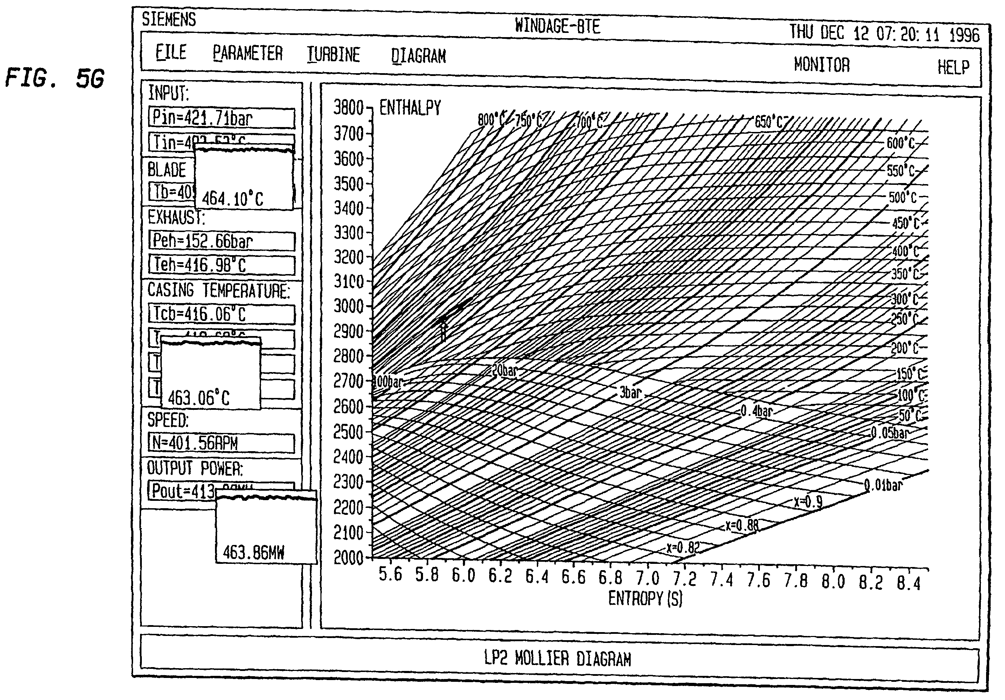

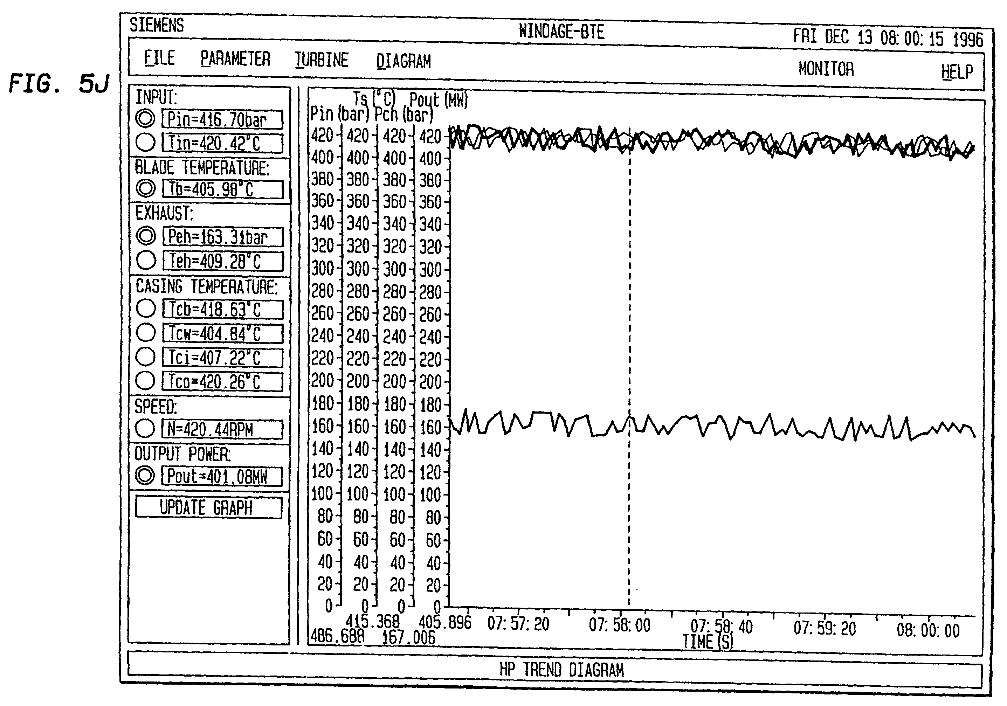

From the front page, Figure 5(a), the user can select, through the 'TURBINE' menu, so as to view any of the following turbine windows:

- HP turbine,
- LP1 turbine,
- LP2 turbine,
- or any other turbines (of applicable).

For each turbine, there are three view windows that can be selected through the 'DIAGRAM' menu:

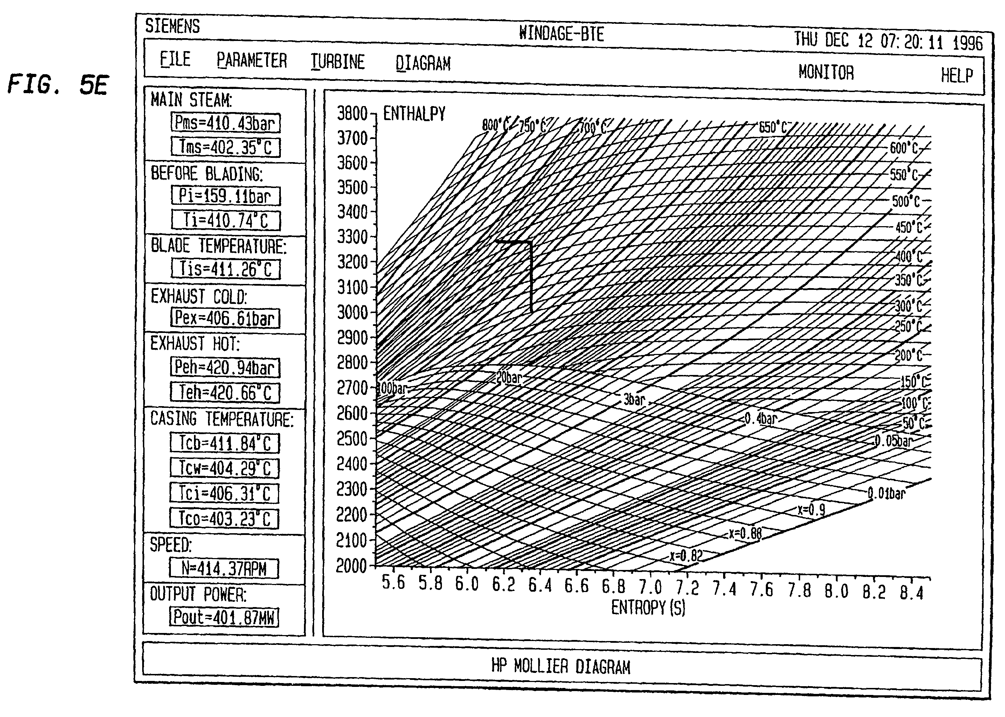

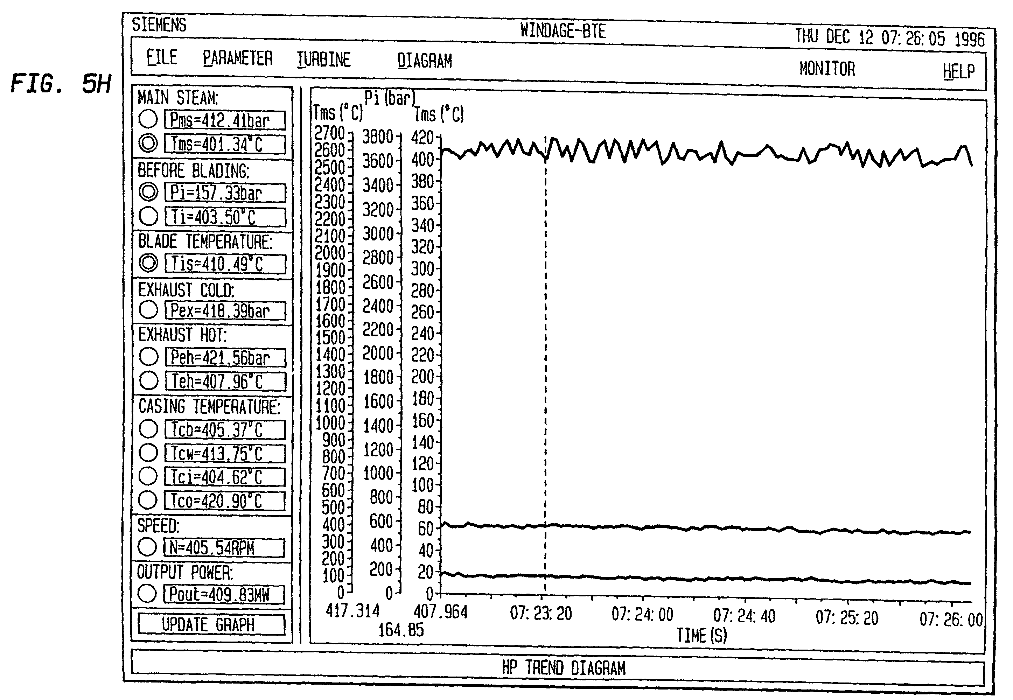

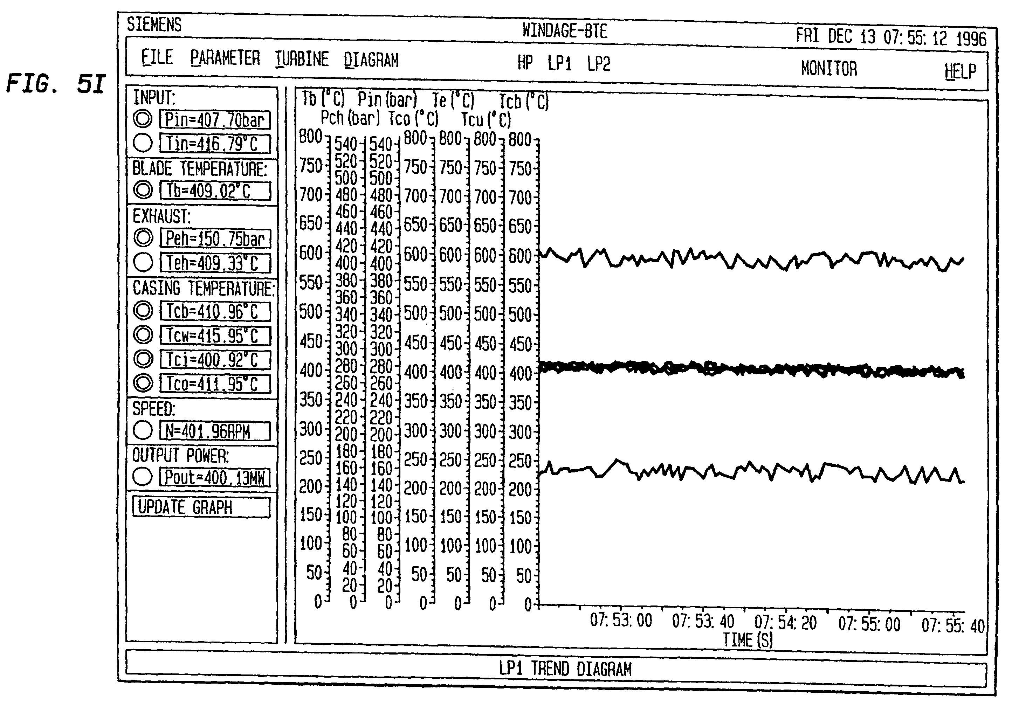

- turbine overview (Figures 5(b) - 5(d),
- mollier diagram (Figures 5(e) - 5(g), or
- trend diagram window (Figs. 5(h) - 5(j).

The turbine overview window' gives the current value of the blade temperature, as well as other information which may be important for the user to make any decision concerning the control of the turbine.

The Mollier diagram is generated based on the standard thermodynamic calculation available on any thermodynamic text book such as the afore-mentioned books. A routine is herein used which will generate the background Mollier grid, and then overlay the expansion data which are calculated from the current measurement values on top of the grid. For example, such a routine is available from Siemens AG in VISUM, a user manual, Version 3, October 1992.

Several features which built into the Mollier diagram window include:

1. Capability to zoom within the enthalpy-entropy graph just by creating a box with the mouse enclosing the desired region.
2. Instant mini trend diagram, which can be activated by clicking at the correponding parameter value table/box.
3. Mollier option interface, provide ways to personalize the viewing parameters to the user preferences. It also provide temperature thresholding which allow the user to set a certain threshold for activating the warning label and sending an alarm signal to the operator.

The trend diagram allows the selection of up to ten parameters to be shown at the same time. The maximum number of parameters that can be shown is essentially unlimited; however, any number larger than ten will cause difficulties in viewing the graph itself. It has the same feature as feature #2 in the Mollier diagram. The exact value within a graph can be found by clicking on the desired point. The exact value will be displayed under the corresponding axis.

From the trend diagram window, the user can further analyze the data by selecting the 'FREE GRAPHICS' which will give the user access to the complete data base. This component is provided within the DIGEST system.

The GUI display process will access the necessary data from the Shared Memory, with the exception of the FREE GRAPHICS routines which will access data from the data base through the data server.

While the invention has been described by way of exemplary embodiments, various changes and modifications will suggest themselves to one skilled in the art who becomes familiar with the invention. For example, the choice of parameters made herein can be changed as a matter of choice or convenience. These, and like changes are contemplated to be within the scope of the invention which is defined by the claims following.

**Claims**

1. A graphical user interface for a system for monitoring steam turbine blade temperature utilizing measurement parameter values, said interface utilizing a computer for displaying a menu so as to allow selection for viewing of any of the following turbine diagram windows:

   turbine overview;
   HP turbine;
   LP1 turbine;
   LP2 turbine;
   any other turbine included within the system;

   wherein for each turbine, view windows selectable through said menu are provided, including: turbine overview (Figures 5(b)-5(d)), actual on-line turbine condition on a Mollier diagram (Figures 5(e)-5(g)), and a trend diagram window (Figures 5(h)-5(j));
   said turbine overview window (Figures 5(b)-5(d)) displaying a current value of blade temperature; and
   said Mollier diagram (Figures 5(e)-5(g)) and said actual turbine condition on said Mollier diagram (Figures 5(e)-5(g)) being generated automatically by said computer based on thermodynamic calculations and blade temperature estimation by a hybrid artificial neural network.

2. A graphical user interface in accordance with claim 1, wherein said turbine overview view window (Figures 5(b)-5(d)) also displays other information deemed important for a user in making a decision concerning the control of the said turbine.

3. A graphical user interface in accordance with claim 2, wherein said Mollier diagram (Figures 5(e)-5(g)) is generated by said computer utilizing a routine which will generate a background Mollier grid, and then automatically overlay real time data derived from measurement parameter values and blade temperature utilizing said estimation by a hybrid artificial neural network.

4. A graphical user interface in accordance with claim 3, wherein said Mollier diagram view window (Figures 5(e)-5(g) has the capability for any and all of :

   zooming within the enthalpy-entropy graph just by creating a box with the mouse enclosing the desired region;
   displaying an instant mini trend diagram, which can be activated by clicking at the corresponding parameter value table/box;
   by way of a Mollier option interface, providing user options to personalize viewing parameters; and
   providing temperature thresholding which allows a user to set a certain threshold for activating a warning label and sending an alarm signal to an operator.

5. A graphical user interface in accordance with any preceding claim, wherein said trend diagram view window (Figures 5(h)-5(j)) allows the selection of up to ten diagrams.

6. A graphical user interface in accordance with any preceding claim, wherein said trend diagram view window (Figures 5(h)-5(j)) allows the display of an exact value at a desired point within a graph by clicking on said desired point, whereby said exact value will be displayed under the corresponding axis.

7. A graphical user interface according to any preceding claim, wherein said trend diagram view window (Figures 5(h)-5(j)) allows a user to further analyze data by selecting 'FREE GRAPHICS' which will give access to the complete data base.

8. A graphical user interface for providing a real-time information display of turbine operation so that critical parameter values and undesirable combinations of operating conditions are readily observable and deviations are made apparent so that corrective action can be initiated rapidly, said interface providing an overview of an operating situation, made more readily apparent by representing operating expansion and compression process in real time by lines automatically generated on an automatically generated Mollier enthalpy/entropy chart based on thermodynamic calculations and blade temperature estimation by a hybrid artificial neural network, together with real-time parameter values and parameter trends.

9. A system for monitoring steam turbine blade temperature, wherein the system includes a graphical user interface as claimed in any preceding claim.

**Patentansprüche**

1. Graphische Benutzerschnittstelle für ein System zum Überwachen der Schaufeltemperatur von Dampfturbinen mit Hilfe von gemessenen Parameterwerten, wobei in der Schnittstelle ein Computer zum Darstellen eines Menüs eingesetzt wird, das es erlaubt, irgendeines der folgenden Turbinendiagrammfenster zur Ansicht auszuwählen:

  Turbinenüberblick;
  Hochdruckturbine;
  Niederdruckturbine 1;
  Niederdruckturbine 2;
  sämtliche anderen im System enthaltenen Turbinen,

  wobei für jede Turbine über das Menü anwählbare Darstellungsfenster bereitgestellt sind, die umfassen: Turbinenüberblick (Fig. 5(b) - 5(d)), aktueller Online-Turbinenzüstand auf einem Mollierdiagramm (Fig. 5(e) - 5(g)), und ein Trenddiagrammfenster (Fig. 5(h) - 5(j)),
  wobei das Turbinenüberblicksfenster (Fig. 5(b) - 5(d)) einen Momentanwert der Schaufeltemperatur darstellt; und
  das Mollierdiagramm (Fig. 5(e) - 5(g)) und der aktuelle Turbinenzustand auf dem Mollierdiagramm (Fig. 5(e) - 5(g)) automatisch anhand von computergestützten thermodynamischen Berechnungen und Schaufeltemperaturschätzungen mit einem hybriden künstlichen neuronalen Netzwerk erzeugt werden.

2. Graphische Benutzerschnittstelle nach Anspruch 1, wobei das Turbinenüberblicksfenster (Fig. 5(b) - 5(d)) auch weitere Information darstellt, die als wichtig für einen Benutzer erachtet wird, damit er eine Entscheidung bezüglich der Turbinenregelung treffen kann.

3. Graphische Benutzerschnittstelle nach Anspruch 2, wobei der Computer das Mollierdiagramm (Fig. 5(e) - 5(g)) mit Hilfe einer Routine erzeugt, die ein Hintergrund-Molliergitter erzeugt und dann automatisch Echtzeitdaten darüberlegt, die aus gemessenen Parameterwerten und der Schaufeltemperatur abgeleitet werden, wobei die Schätzung durch das künstliche neuronale Netzwerk verwendet wird.

4. Graphische Benutzerschnittstelle nach Anspruch 3, wobei das Mollierdiagramm-Ansichtsfenster (Fig. 5 (e) - 5(g)) irgendeine der folgenden Fähigkeiten bzw. alle Fähigkeiten zusammen aufweist:

  Vergrößern innerhalb der Enthalpie/Entropie-Kurve einfach durch das Erzeugen eines Kästchens mit der Maus, das den gewünschten Bereich einschließt;
  Darstellen eines momentanen Minitrenddiagramms, das man dadurch aktivieren kann, dass man auf die entsprechende Parameterwerttabelle bzw. das Kästchen klickt;
  mit Hilfe einer Mollieroptions-Schnittstelle das Bereitstellen von Benutzeroptionen für persönliche Darstellungsparameter; und
  Bereitstellen von Temperaturgrenzwerten, die es einem Benutzer erlauben, einen bestimmten Grenzwert zu setzen, der eine Warnkennung aktiviert und ein Alarmsignal an eine Bedienperson sendet.

5. Graphische Benutzerschnittstelle nach irgendeinem vorhergehenden Anspruch, wobei das Trenddiagramm-Ansichtsfenster (Fig. 5(h) - 5(j)) die Auswahl von bis zu zehn Diagrammen erlaubt.

6. Graphische Benutzerschnittstelle nach irgendeinem vorhergehenden Anspruch, wobei das Trenddiagramm-Ansichtsfenster (Fig. 5(h) - 5(j)) die Darstellung eines exakten Werts an einem gewünschten Punkt innerhalb einer Kurve dadurch ermöglicht, dass man auf diesen gewünschten Punkt klickt, wobei der exakte Wert unter der entsprechenden Achse dargestellt wird.

7. Graphische Benutzerschnittstelle nach irgendeinem vorhergehenden Anspruch, wobei das Trenddiagramm-Ansichtsfenster (Fig. 5(h) - 5(j)) einem Benutzer die weitere Analyse von Daten dadurch erlaubt, dass er 'FREE GRAPHICS' wählt, wodurch der Zugriff auf die vollständige Datenbank möglich ist.

8. Graphische Benutzerschnittstelle, die eine Echtzeit-Informationsdarstellung des Turbinenbetriebs bietet, so dass man kritische Parameterwerte und unerwünschte Kombinationen von Betriebszuständen leicht beobachten kann und Abweichungen offensichtlich werden, so dass rasch mit einer Korrekturhandlung begonnen werden kann, wobei die Schnittstelle einen Überblick über eine Betriebssituation bietet, den man leichter erfassen kann, indem die betrieblichen Expansions- und Kompressionsprozesse in Echtzeit mit Linien dargestellt werden, die in ein automatisch erzeugtes Mollier-Enthalpie/Entropie-Diagramm eingetragen werden, und zwar abhängig von thermodynamischen Berechnungen und Schaufeltemperaturschätzungen mit einem hybriden künstlichen neuronalen Netzwerk zusammen mit Echtzeit-Parameterwerten und Parametertrends.

9.  System zum Überwachen der Schaufeltemperatur von Dampfturbinen, wobei das System eine graphische Benutzerschnittstelle nach irgendeinem vorhergehenden Anspruch umfasst

**Revendications**

1.  Interface utilisateur graphique pour un système de surveillance de la température des pales d'une turbine à vapeur utilisant des valeurs de paramètres de mesure, ladite interface utilisant un ordinateur pour afficher un menu afin de permettre une sélection pour visualiser l'une quelconque des fenêtres de diagrammes de turbines suivantes :

    un aperçu général des turbines ;
    une turbine HP ;
    une turbine LP1 ;
    une turbine LP2 ;
    toute autre turbine que comporte le système ;

    dans lequel, pour chaque turbine, des fenêtres de visualisation pouvant être sélectionnées au moyen dudit menu sont proposées, celles-ci comprenant : un aperçu général des turbines (figures 5(b)-5(d)), une condition de fonctionnement en ligne effective des turbines sur un diagramme de Mollier (figures 5(e)-5(g)), et une fenêtre de diagramme de tendance (figures 5(h)-5(j)) ;

    ladite fenêtre d'aperçu général des turbines (figures 5(b)-5(d)) affichant la valeur courante d'une température de pale ; et

    ledit diagramme de Mollier (figures 5(e)-5(g)) et ladite condition de fonctionnement effective des turbines sur ledit diagramme de Mollier (figures 5 (e)-5(g)) étant générés automatiquement par ledit ordinateur sur la base de calculs thermodynamiques et d'une estimation de la température de pale par un réseau neuronal artificiel hybride.

2.  Interface utilisateur graphique selon la revendication 1, dans laquelle la fenêtre de visualisation d'aperçu général des turbines (figures 5(b)-5(d)) affiche également d'autres informations réputées importantes pour un utilisateur lorsqu'il prend une décision concernant la commande de ladite turbine.

3.  Interface utilisateur graphique selon la revendication 2, dans laquelle ledit diagramme de Mollier (figures 5(e)-5(g)) est généré par ledit ordinateur par utilisation d'un sous-programme qui produira une grille de Mollier d'arrière-plan, puis superposera automatiquement des données déduites en temps réel à partir de valeurs de paramètres de mesure et d'une température de pale en utilisant ladite estimation effectuée par un réseau neuronal artificiel hybride.

4.  Interface utilisateur graphique selon la revendication 3, dans laquelle ladite fenêtre de visualisation du diagramme de Mollier (figures 5(e)-5(g)) présente l'une quelconque ou la totalité des fonctionnalités suivantes :

    un zoom à l'intérieur du graphique d'enthalpie-entropie par simple création d'une boîte au moyen de la souris en entourant la région souhaitée ;
    l'affichage d'un mini-diagramme de tendance instantanée qui peut être activé par un clic sur une table/boîte de valeurs de paramètres correspondantes ;
    au moyen d'une interface d'options de Mollier, la fourniture d'options d'utilisateur pour personnaliser des paramètres de visualisation ; et
    la fourniture d'un seuil de température qui permet à un utilisateur de fixer un certain seuil pour activer un panneau d'avertissement et envoyer un signal d'alarme à un opérateur.

5.  Interface utilisateur graphique selon l'une quelconque des revendications précédentes, dans laquelle ladite fenêtre de visualisation d'un diagramme de tendance (figures 5(h)-5(j)) permet de sélectionner jusqu'à dix diagrammes.

6.  Interface utilisateur graphique selon l'une quelconque des revendications précédentes, dans laquelle ladite fenêtre de visualisation d'un diagramme de tendance (figures 5(h)-5(j)) permet d'afficher une valeur exacte en un point souhaité d'un graphique en cliquant sur ledit point souhaité, de sorte que ladite valeur exacte sera affichée sous l'axe correspondant.

7.  Interface utilisateur graphique selon l'une quelconque des revendications précédentes, dans laquelle ladite fenêtre de visualisation d'un diagramme de tendance (figures 5(h)-5(j)) permet à un utilisateur d'analyser de façon plus détaillée des données en sélectionnant "GRAPHIQUES LIBRES" pour avoir accès à la base de données complète.

8.  Interface utilisateur graphique destinée à fournir un affichage d'informations en temps réel concernant le fonctionnement de turbines afin que des valeurs de paramètres critiques et que des combinaisons indésirables de conditions de fonctionnement soient facilement observables et que des écarts soient rendus apparents afin qu'une intervention puisse être déclenchée rapidement, ladite interface fournissant un aperçu général d'une situation de fonctionnement rendue plus facilement apparente en représentant en temps réel un processus de dilatation et de compression d'un fonctionnement par des lignes générées automatiquement sur un graphique d'enthalpie/entropie de Mollier généré automatiquement sur la base de calculs thermodynamiques et d'une estimation de la température de pale effectuée par un réseau neuronal artificiel hybride, en association avec des valeurs de paramètres temps réel et des tendances des paramètres.

9. Système de surveillance de la température de pales d'une turbine à vapeur, ledit système comprenant une interface utilisateur graphique selon l'une quelconque des revendications précécedentes

## FIG. 1

**ACQUISITION LEVEL**

↓↓↓ MEASURED SIGNALS ⋯ ↓

SIMATIC S5

**COMMUNICATION LEVEL** ETHERNET

OMNI-SERVER, DECnet PHASE V

DEC-S5 | S5-DEC

**ADMINISTRATIVE LEVEL**

TELEGRAM DISTRIBUTOR | TIME-CONTROL | DE-LOG | TELEGRAM RECEIVER | WATCH DOG

RQTs REQUIREMENT TELEGRAM | RQTs RAW DATA TELEGRAM

**ACTION LEVEL**

PROCESS CONTROL MANAGER

BLADE TEMPERATURE ESTIMATOR | INTERFACE FILE | INTERPRETER

ESTIMATOR PARAMETERS | EVALUATE RESULT | TRAINING SCHEME | TRAINING DATA | MATHEMATICAL MODEL

**DATA LEVEL**

DATA SERVER | DATA BASE

**PRESENTATION LEVEL**

FREE GRAPHICS | WINDAGE GUI | SHARED MEMORY

## FIG. 2A

## FIG. 2B

# FIG. 3

```
┌──────────────┐        ┌──────────────────┐
│ EXPERIMENTAL │        │ WATER/STEAM CYCLE│
│    DATA      │        │ ANALYSIS PROGRAM:│
│              │        │  GENERATE DATA   │
└──────┬───────┘        └────────┬─────────┘
       │                         │
       └──────────┬──────────────┘
                  ▼
          ┌───────────────┐
          │  COMBINE DATA │
          └───────┬───────┘
                  ▼
          ┌────────────────────┐
          │ REFORMAT AND ORGA- │
          │ NIZE TRAINING AND  │
          │ TESTING DATAFILE   │
          └────────┬───────────┘
                   ▼
          ┌────────────────────┐
          │    ANN MODULE      │
   ┌─────▶│   TRAINING AND     │
   │      │    VALIDATION      │
   │      └────────┬───────────┘
   │               ▼
┌──────────────┐  ◇───────────────◇
│MODIFY TRAINING│ ╱   CONVERGE    ╲
│PARAMETERS OR THE│◀NO  SATISFACTORILY? │
│ ANN STRUCTURE │ ╲               ╱
└──────┬───────┘  ◇───────┬───────◇
       │                  │ YES
       │                  ▼
       │          ┌──────────────┐
       │          │  ANN MODULE  │
       │          │   TESTING    │
       │          └──────┬───────┘
       │                 ▼
       │          ◇───────────────◇
       └───────NO╱  SATISFACTORY?  ╲
                 ╲                 ╱
                  ◇───────┬───────◇
                          │ YES
                          ▼
                    ╭──────────╮
                    │   STOP   │
                    ╰──────────╯
```

## FIG. 4A

```
                        MAIN MENU

FRONT PAGE    MOLLIER    TREND    TURBINE IMAGE

          ┌─────────────────────────────────┐
          │    SHARED MEMORY MANAGEMENT      │    FREE GRAPHICS
          └─────────────────────────────────┘
                                                  DATA SERVER
               SHARED MEMORY
                                                  DATA BASE
```

## FIG. 4B

```
                        FRONT PAGE

               HP        LP1         LP2

    PARAMETER LABELS     HP DRAWING ROUTINE      SIMILAR STRUCTURE
                                                 FOR LP1, LP2, ...
        ┌─────────────────────────────────────────────────────────┐
        │   GLOBAL LABELS                                          │
        │                            SHARED MEMORY MANAGEMENT      │
        └─────────────────────────────────────────────────────────┘
```

## FIG. 4C

## FIG. 4D

FIG. 5A

SIEMENS       WINDAGE-BTE       THU DEC 12 07: 20: 11 1996

FILE   PARAMETER   TURBINE   DIAGRAM   WARMING  HP  LP1  LP2     MONITOR   HELP

$T_b = 404.49°C$    $T_b = 406.29°C$

$T_{bis} = 420.79°C$

G

POWER=409.66MW

*FIG. 5B*

Tf3=405.04°C

Pms=401.87bar

Tms=403.23°C

Pi=166.46bar

Ti=401.76°C

Tcw=412.32°C

Tcb=410.80°C

N=404.20rpm

Tci=416.79°C

Tco=413.57°C

Pch=406.95bar

Teh=420.31°C

Pex=406.49bar

IP

CONDENSER

OFF

*FIG. 5C*

Tblade=412.96°C

Pin=419.98bar

Tin=410.69°C

Tcw=416.57°C

Tcb=410.74°C

N=420.04bar

Tci=403.56°C

Tco=420.22°C

Peh=152.71rpm

Teh=420.09bar

CONDENSER

17

## FIG. 5D

Tblade=414.76°C

Pin=410.30bar

Tin=403.12°C

Tcu=407.55°C

Tcb=408.67°C

N=403.12bar

Tci=415.95°C

Tco=409.20°C

CONDENSER

Peh=160.58rpm

Teh=403.06bar

## FIG. 5E

SIEMENS                    WINDAGE-BTE              THU DEC 12 07: 20: 11 1996

FILE    PARAMETER    TURBINE    DIAGRAM                    MONITOR        HELP

MAIN STEAM:
Pms=410.43bar
Tms=402.35°C

BEFORE BLADING:
Pi=159.11bar
Ti=410.74°C

BLADE TEMPERATURE:
Tis=411.26°C

EXHAUST COLD:
Pex=406.61bar

EXHAUST HOT:
Peh=420.94bar
Teh=420.66°C

CASING TEMPERATURE:
Tcb=411.84°C
Tcw=404.29°C
Tci=406.31°C
Tco=403.23°C

SPEED:
N=414.37RPM

OUTPUT POWER:
Pout=401.87MW

HP MOLLIER DIAGRAM

ENTHALPY

800°C  750°C  700°C  650°C  600°C  550°C  500°C  450°C  400°C  350°C  300°C  250°C  200°C  150°C  100°C  50°C

100bar    20bar    3bar    0.4bar    0.05bar    0.01bar

x=0.9    x=0.88    x=0.82

3800 3700 3600 3500 3400 3300 3200 3100 3000 2900 2800 2700 2600 2500 2400 2300 2200 2100 2000

5.6 5.8 6.0 6.2 6.4 6.6 6.8 7.0 7.2 7.4 7.6 7.8 8.0 8.2 8.4

ENTROPY (S)

EP 0 944 768 B1

**FIG. 5F**

SIEMENS — WINDAGE-BTE — FRI DEC 13 08:56:34 1996

FILE   PARAMETER   TURBINE   DIAGRAM   MONITOR   HELP

INPUT:
Pim=417.20bar
Tim=400.77°C

BLADE TEMPERATURE:
Tb=416.___°C

EXHAUST H___
Peh=151___   463.60°C
Teh=406.67°C

CASING TEMPERATURE:
Tcb=407.61°C
Tcw=407.70°C
Tci=418.13°C
Tco=412.45°C

SPEED:
N=402.00RPM

OUTPUT POWER:
P___
462.87MW

ENTHALPY — ENTROPY (S)

HP MOLLIER DIAGRAM

**FIG. 5G**

LP2 MOLLIER DIAGRAM

FIG. 5H

SIEMENS    WINDAGE-BTE    THU DEC 12 07:26:05 1996

FILE   PARAMETER   TURBINE   DIAGRAM   MONITOR   HELP

MAIN STEAM:
- Pms=412.41bar
- ⊚ Tms=401.34°C

BEFORE BLADING:
- ⊚ Pi=157.33bar
- Ti=403.50°C

BLADE TEMPERATURE:
- ⊚ Tis=410.49°C

EXHAUST COLD:
- Pex=418.39bar

EXHAUST HOT:
- Peh=421.56bar
- Teh=407.96°C

CASING TEMPERATURE:
- Tcb=405.37°C
- Tcw=413.75°C
- Tci=404.62°C
- Tco=420.90°C

SPEED:
- N=405.54RPM

OUTPUT POWER:
- Pout=409.83MW

UPDATE GRAPH

Pi (bar)
Tms (°C)  Tms (°C)

2700 / 3800 / 420
2600 / 3600 / 400
2500
2400 / 3400 / 380
2300 / 3200 / 360
2200
2100 / 3000 / 340
2000 / 2800 / 320
1900 / 300
1800 / 2600 / 280
1700 / 2400 / 260
1600
1500 / 2200 / 240
1400 / 2000 / 220
1300 / 1800 / 200
1200
1100 / 1600 / 180
1000 / 1400 / 160
900 / 140
800 / 1200 / 120
700 / 1000 / 100
600 / 800 / 80
500
400 / 600 / 60
300 / 400 / 40
200
100 / 200 / 20
0 / 0 / 0

417.314  407.964  07:23:20  07:24:00  07:24:40  07:25:20  07:26:00
164.85                           TIME (S)

HP TREND DIAGRAM

EP 0 944 768 B1

FIG. 5I

SIEMENS　　　　　　　　　　　WINDAGE-BTE　　　　　　　FRI DEC 13 07:55:12 1996

FILE  PARAMETER  TURBINE  DIAGRAM　　　HP  LP1  LP2　　　　MONITOR　　　HELP

INPUT:
◎ Pin=407.70bar
○ Tin=416.79°C

BLADE TEMPERATURE:
◎ Tb=409.02°C

EXHAUST:
◎ Peh=150.75bar
○ Teh=409.33°C

CASING TEMPERATURE:
◎ Tcb=410.96°C
◎ Tcw=415.95°C
◎ Tci=400.92°C
◎ Tco=411.95°C

SPEED:
○ N=401.96RPM

OUTPUT POWER:
○ Pout=400.13MW

UPDATE GRAPH

Tb (°C)  Pin (bar)  Te (°C)  Tcb (°C)
Pch (bar)  Tco (°C)  Tcu (°C)

TIME (S)
07:53:00  07:53:40  07:54:20  07:55:00  07:55:40

LP1 TREND DIAGRAM

EP 0 944 768 B1

**FIG. 5J**

SIEMENS     WINDAGE-BTE     FRI DEC 13 08:00:15 1996

FILE    PARAMETER    TURBINE    DIAGRAM      MONITOR    HELP

INPUT:
- ◎ Pin=416.70bar
- ○ Tin=420.42°C

BLADE TEMPERATURE:
- ◎ Tb=405.98°C

EXHAUST:
- ◎ Peh=163.31bar
- ○ Teh=409.28°C

CASING TEMPERATURE:
- ○ Tcb=418.63°C
- ○ Tcw=404.84°C
- ○ Tci=407.22°C
- ○ Tco=420.26°C

SPEED:
- ○ N=420.44RPM

OUTPUT POWER:
- ◎ Pout=401.08MW

UPDATE GRAPH

Ts (°C)   Pout (MW)
Pin (bar)   Pch (bar)

415.368    405.896
486.688    167.006

TIME (S): 07:57:20   07:58:00   07:58:40   07:59:20   08:00:00

HP TREND DIAGRAM